# EUROPEAN PATENT SPECIFICATION

(11) **EP 2 377 741 B1**
(45) Date of publication and mention of the grant of the patent: **07.12.2016**
(21) Application number: 11162570.3
(22) Date of filing: 15.04.2011
(51) Int. Cl.: B62D 1/18

(54) **Steering column**
Lenksäule
Colonne de direction

(30) Priority: 16.04.2010 IT MI20100655
(43) Date of publication of application: 19.10.2011
(73) Proprietor: A.M.A. S.p.A., 42018 San Martino in Rio RE (IT)
(72) Inventor: Campana, Daniele, 41011, Campogalliano (IT); Marani, Marco, 44043, Mirabello (IT)
(74) Representative: Laghi, Alberto

(56) References cited:
- FR-A5- 2 122 129
- US-A- 4 793 204
- US-A- 5 168 768
- US-A1- 2004 251 672
- US-B2- 7 263 910

## Description

### Field of the invention

The present invention relates to a steering column.

In particular, the steering column according to the present invention is used advantageously in the steering gear of slow-moving vehicles, for example agricultural machinery, earth-moving machines and similar, or lift trucks in general, to which the following description will refer explicitly but without losing generality.

### Prior art

In general, in steering gear for slow-moving machines the steering column is of the known type comprising a tubular steering column with a bottom end that can be anchored to a support (for example a floor panel of an agricultural machine or of a lift truck), a shaft mounted rotatably inside said tubular steering column, and a steering wheel connected at an angle to an upper end of the shaft.

The steering column comprises a first fixed portion of adjustable length and with a first longitudinal axis, said portion in its turn generally defined by two tubular elements connected together telescopically, and a second portion with a second longitudinal axis, said second portion being connected to the first portion to rotate about a third axis transverse to the two aforementioned first and second longitudinal axes.

A steering column of the type described above, in which a device for controlling the position of the steering wheel relative to the bottom end of the steering column envisages control elements that are able to modify the mutual position of the two aforementioned tubular elements that are connected together telescopically, and with second control elements for controlling the angular position of the steering wheel about the third axis, both the first and the second control elements being actuable by operating a single control of the manual lever type arranged immediately underneath said steering wheel, is known from United States patent US 7,263,910 B1.

According to this known solution, raising the manual lever by an operator determines the movement of suitable cam mechanisms that cause release of the steering wheel relative to the steering column in order to allow both telescopic adjustment of the position of the steering wheel and its angular position by means of the aforementioned first and second control elements.

The solution described above, known from the aforementioned United States patent, has the drawback that it proves to be rather inefficient and often uncomfortable, in particular because of the cam mechanisms, which are subject to rapid wear and/or jamming and therefore do not permit a quick and easy action of release of the steering wheel relative to the steering column to allow subsequent adjustment.

### Summary of the invention

The purpose of the present invention is therefore to provide a steering column that does not have the drawback of the aforementioned prior art.

In particular, one aim of the present invention is to provide a steering column in which the position of the steering wheel can be adjusted swiftly and quickly, preceded by a quick and easy releasing action, both with regard to telescopic extension in height and in relation to the angular position.

According to the present invention, a steering column is constructed, comprising a tubular steering column provided with a bottom end that can be anchored to a support, said steering column being defined by a first portion that has a first longitudinal axis, and a second portion with a second longitudinal axis, the second portion being connected adjustably to said first portion to rotate about a third axis transverse to said first and second axis by means of coupling means; a shaft mounted rotatably inside said tubular steering column; a steering wheel connected at an angle to an upper end of said shaft; and a control assembly to permit activation of the positional adjustment of said steering wheel relative to said steering column, the column being characterized in that said control assembly comprises connecting means between said first portion and said second portion, mounted as a sliding fit on said first portion; said connecting means comprising toothed gearing means formed on said connecting means, sliders that are a sliding fit parallel to said first axis on said connecting means and provided with an end portion that can be connected to said toothed gearing means, and actuating means that can cause sliding movement of said sliders between a position of engagement of said portion with said toothed means, and a position of disengagement from said toothed means.

### Description of the drawings

The technical characteristics of the invention, according to the aforementioned aims, can be seen clearly from the contents of the claims given below, and the advantages thereof will become clearer from the detailed description that follows, referring to the accompanying drawings, showing schematically a preferred but non-limiting embodiment of the steering column in question, in which:
- Fig. 1 is a schematic front view, with some parts removed for clarity, of a preferred embodiment of the steering column of the invention;
- Fig. 2 shows a perspective view of a portion of the steering column of Fig. 1;
- Fig. 3 is a perspective view of a detail of the steering column of Fig. 1 in a first operating position;
- Fig. 4 is another perspective view on an enlarged scale of the steering column shown in the operating position in Fig. 3;
- Fig. 5 shows a partial sectional view of the steering column shown in the operating position in Fig. 4;
- Fig. 6 is a perspective view on an enlarged scale of a detail of the steering column of Fig. 1 in a second operating position; and
- Fig. 7 shows a partial sectional view of the steering column shown in the operating position in Fig. 6.

### Description of the invention

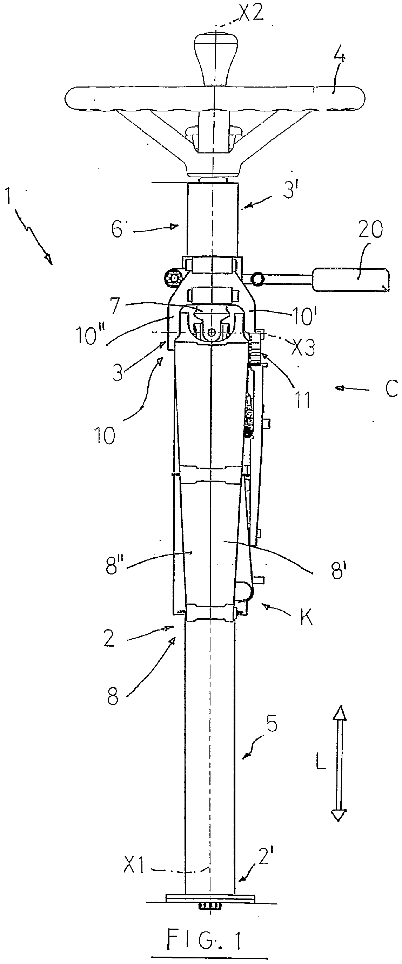

Referring to Fig. 1, 1 designates generally a steering column, in particular as used in the steering gear of slow-moving machines, preferably, but not limited to, agricultural machinery, earth-moving machines and the like, or lift trucks in general.

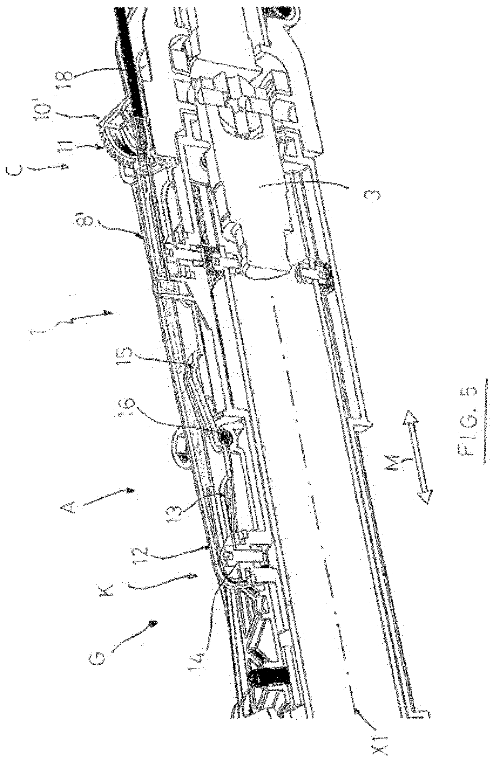

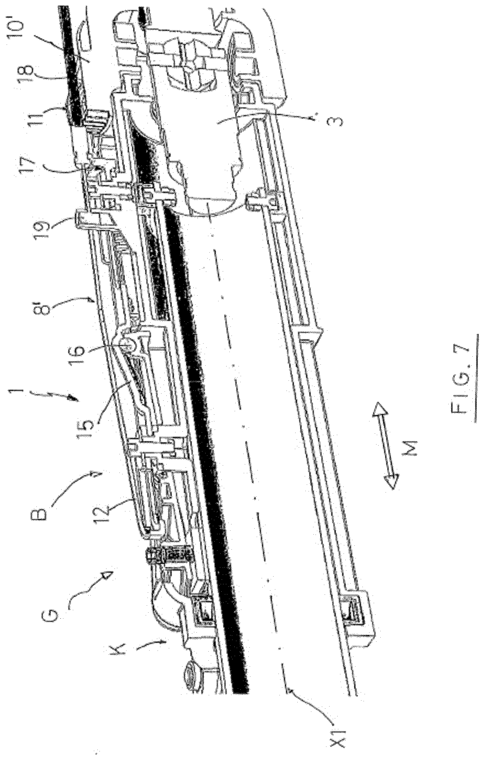

Steering column 1 is of the type comprising a tubular column 2 with a bottom end 2' that can be anchored to a body (for example a floor panel of an agricultural machine or of a lift truck), a shaft 3 (Figs. 5 and 7) mounted rotatably inside said tubular column 2, and a steering wheel 4 connected at an angle to an upper end 3' of shaft 3 to allow an operator to move shaft 3 by means of a steering mechanism (known and not shown).

Steering column 2 comprises a first bottom portion 5 having a longitudinal axis X1 and a second top portion 6 having a longitudinal axis X2, said second portion 6 being connected adjustably to the first portion 5 to rotate about a third axis X3 transverse to the two aforementioned longitudinal axes X1 and X2, by means of a universal joint 7 of known type and supporting the keyed steering wheel 4.

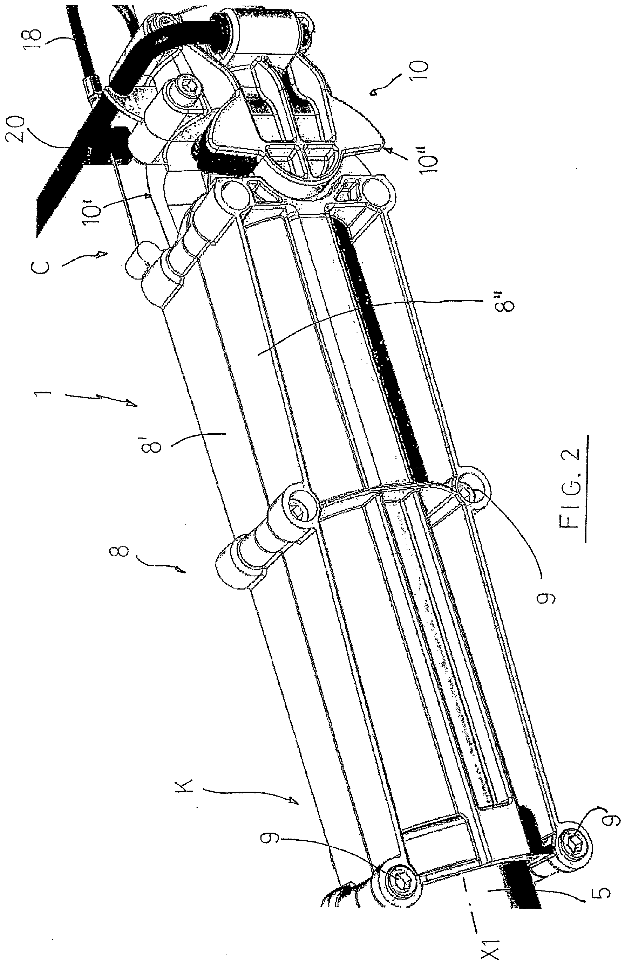

As shown in Figs. 1 and 2, column 1 further comprises connecting means C for connecting the first portion 5 to the second portion 6 of the steering column 2, a part designated K of said means C being able to slide on, and relative to, the first portion 5 (arrow L in Fig. 1), partially containing said first portion 5 immediately under joint 7.

As shown in Figs. 1 to 4, the connecting means C comprise a substantially box-shaped element 8 defined by two half bearings 8' and 8" connected together and fixed by means of suitable fixing means 9.

Still as shown in Figs. 1 to 4, the connecting means C further comprise a forked element 10, which is connected at the top to the second portion 6 of the steering column 2, and at the bottom is pivoted to the aforementioned element 8 to rotate relative to said element 8 and about axis X3.

In detail, forked element 10 comprises two half bearings 10' and 10", pivoted to half bearings 8' and 8" respectively.

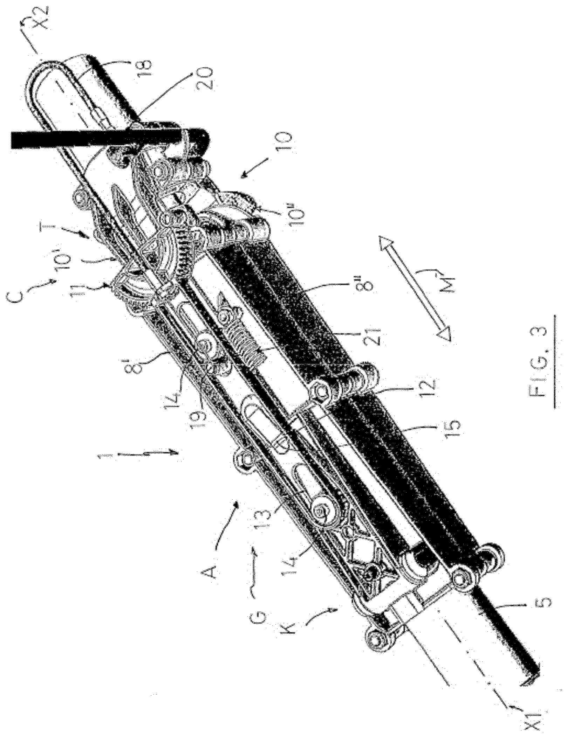

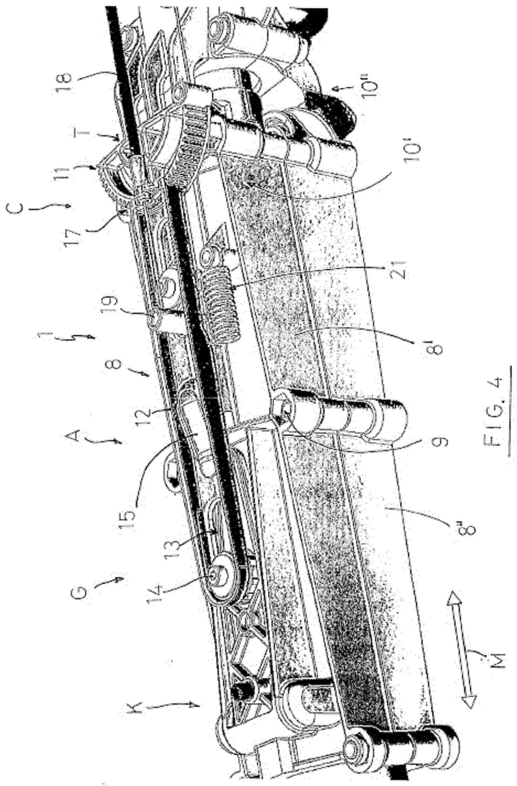

As shown in Figs. 3 and 4, only half bearing 10' carries, preferably formed as a single block on said half bearing 10', corresponding to a lateral peripheral surface of one end thereof, a flat toothed semicircular sector 11.

In the present invention, half bearings 8' and 8", and 10' and 10", and the toothed semicircular sector 11 of half bearing 10', are advantageously made by pressure die-casting of, preferably, but not limited to, aluminium alloy or similar.

Column 1 further comprises a control assembly G to permit activation of positional adjustment of the steering wheel 4 relative to the bottom portion 5 of steering column 2.

As shown in Figs. 3 to 7, assembly G comprises, as well as the aforementioned connecting means C, an elongated element or slider 12 provided with two suitable elongated slots 13 for fixing longitudinally slidable on the peripheral surface of half bearing 8', by known fixing means designated 14.

As shown in Figs. 3 to 7, on slider 12, fitted slidable on half bearing 8', there is in addition a bowl-shaped seating 15 substantially in the form of a concave truncated cone, with the concavity facing said half bearing 8', which is able to slide relative to a ball 16 positioned in a suitable fixed seating provided on half bearing 8'.

Slider 12 has a notched end 17 able to engage with the teeth of toothed sector 11 and connected at the top in a known manner to a portion T of a sheathed metal connecting cable 18, one end of which is fixed to a pin 19 on half bearing 8'. Cable 18 is, for example, but not limited to, a known cable of the Bowden type, or of the type as used in bicycle brake systems.

Cable 18 is moreover fixed by its opposite end to half bearing 10', and is connected, in a known manner that is not shown, to a manual operating lever 20.

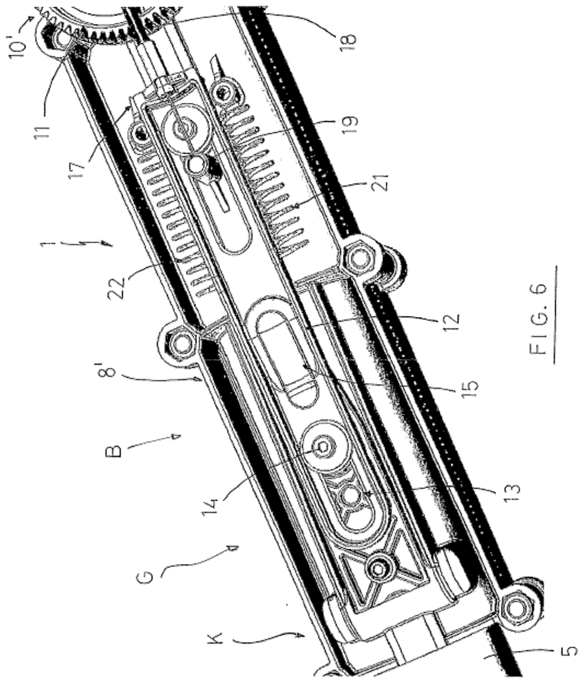

Slider 12 is able, in use, to slide, in parallel relative to axis X1 and in the direction of arrow M in Figs. 3, 4, 5 and 7, under the rotational thrust exerted by the operator on lever 20 and through tension on connecting cable 18, between an engaged position A (Figs. 3, 4 and 5) in which end 17 is coupled to sector 11 by engaging with the teeth of said sector 11, and a disengaged position B (Figs. 6 and 7), corresponding to which said toothed end 17 is disconnected from sector 11, moving away from the teeth of said sector 11, and rising slightly under the action of truncated-cone cap 15 that slides on ball 16.

It should be noted that also slider 12 is advantageously made by pressure die-casting of, preferably, but not limited to, aluminium alloy or similar. Spring-mounted opposing means 21 and 22 (Figs. 3, 4 and 6) are further provided to permit elastic return of slider 12 to its engaged position A, following a new actuation or release of lever 20 by the operator.

In this way, in use, following actuation of lever 19, resulting in the aforementioned disengaged position B, the operator is able to perform quickly and easily, and without jamming, both telescopic height adjustment of the steering wheel 4 and adjustment of the angular position of said steering wheel 4 by means of universal joint 7.

Subsequent actuation or release of lever 20 leads to locking of steering wheel 4 again at the desired height and in the desired angular position or orientation, with the notched end 17 of slider 12 once again engaged with toothed sector 11. According to an alternative embodiment that is not shown, the manually operated lever 20 is replaced with pedal operation, which can be positioned corresponding to end 2' of the steering column 2 close to the anchorage to the body: this configuration is advantageously permitted through the use of the aforementioned connecting cable 18, which can in fact be lengthened to cover the distance between the region of sector 11 and slider 12 to which it is connected and end 2' of the steering column 2 where the aforementioned pedal control is positioned.

In this way, the action of engagement/disengagement becomes even easier and more convenient for the operator with his foot, thus advantageously enabling the operator to adjust the position and orientation of the steering wheel 4 with both hands.

## Claims

1. Steering column (1) comprising a tubular column (2) having a bottom end (2') that can be anchored to a support, said column (2) being defined by:
- a first portion (5) including said bottom end (2') and having a first longitudinal axis (X1),
- a second portion (6) with a second longitudinal axis (X2), said second portion (6) being connected adjustably to said first portion (5) to rotate about a third axis (X3) transverse to said first and second axes (X1, X2) by means of coupling means (7);
- a shaft (3) mounted rotatably inside said tubular column (2);
- a steering wheel (4) connected at an angle to an upper end (3') of said shaft (3);
- a control assembly (G) to permit actuation of positional adjustment of said steering wheel (4) relative to said column (2); **characterized in that** said control assembly (G) comprises:
- connecting means (C) between said first portion (5) and said second portion (6), mounted sliding on said first portion (5); said connecting means (C) comprising toothed gearing means (11) formed on one end of said connecting means (C) wherein said end is connected to said second portion (6);
- a slider (12) fitted for sliding parallel to said first axis (X1) on said connecting means (C) and provided with an end portion (17) that can be connected to said toothed gearing means (11), and
- actuating means (20, 18) that can cause sliding movement of said slider (12) between a position (A) of engagement of said portion (17) with said toothed means (11), and a position (B) of disengagement from said toothed means (11).

2. Steering column according to Claim 1, **characterized in that** said actuating means (20, 18) comprise cable-type means (18), said cable-type means (18) being connected to said slider (12), corresponding to said end portion (17), and a control element (20) connected to said cable-type means (18).

3. Steering column according to Claim 2, **characterized in that** said control element (20) is a lever (20) for manual actuation.

4. Steering column according to Claim 2, **characterized in that** said control element (20) is a pedal lever positioned substantially close to said bottom end (2') of said column (2).

5. Steering column according to one or more of Claims 1 to 4, **characterized in that** said connecting means (C) comprise a box-shaped element (8) partially overlapping said first portion (5), and a forked element (10) connected to said second portion (6) and pivoted on said box-shaped element (8) to rotate relative to said box-shaped element (8) and about said third axis (X3).

6. Steering column according to Claim 5, **characterized in that** said box-shaped element (8) comprises two half bearings (8', 8") fixed connected together around said column (2), and said forked element (10) comprises two half bearings (10', 10") connected together and pivoted, respectively, on said half bearings (8', 8") of said box-shaped element (8).

7. Steering column according to Claim 6, **characterized in that** said toothed gearing means (11) comprise a semicircular toothed sector (11) formed on a lateral peripheral surface of a half bearing (10') of said half bearings (10', 10") of said forked element (10).

8. Steering column according to Claim 7, **characterized in that** said sector (11) is formed on said half bearing (10') of said forked element (10) together with said forked element (10) in a single block preferably made by pressure die-casting.

9. Steering column according to one or more of Claims 6 to 8, **characterized in that** said slider (12) slides on a half bearing (8') of said half bearings (8', 8") of said box-shaped element (8) and has a formed seating (15) as a substantially truncated-cone concave bowl, with the concavity facing said half bearing (8'), said seating (15) being able to slide relative to a ball (16) positioned in a suitable fixed seating provided on said half bearing (8').

10. Steering column according to one or more of Claims 1 to 9, **characterized in that** said control assembly (G) further comprises elastic opposing means (21, 22) mounted on said connecting means (C) to permit elastic return movement of said slider (12) from said disengaged position (B) to said engaged position (A).

11. Working machine, in particular a slow-moving agricultural machine or a lift truck, **characterized in that** it comprises a steering column (1) according to one or more of the preceding claims.

## Patentansprüche

1. Lenksäule (1), die eine rohrförmige Säule (2) umfasst, die ein unteres Ende (2') aufweist, das an einem Träger verankert werden kann, wobei die genannte Säule (2) definiert ist durch:
- einen ersten Abschnitt (5), der das genannte untere Ende (2') enthält und der eine erste Längsachse (X1) aufweist,
- einen zweiten Abschnitt (6) mit einer zweiten Längsachse (X2), wobei der genannte zweite Abschnitt (6) mittels Kopplungsmitteln (7) mit dem genannten ersten Abschnitt (5) einstellbar verbunden ist, um sich um eine dritte Achse (X3) quer zu der genannten ersten und zweiten Achse (X1, X2) zu drehen;
- eine Welle (3), die innerhalb der genannten rohrförmigen Säule (2) drehbar montiert ist;
- ein Lenkrad (4), das unter einem Winkel mit einem oberen Ende (3') der genannten Welle (3) verbunden ist;
- eine Steueranordnung (G), um die Betätigung der Positionseinstellung des genannten Lenkrads (4) relativ zu der genannten Säule (2) zu ermöglichen; **dadurch gekennzeichnet, dass** die genannte Steueranordnung (G) umfasst:
- Verbindungsmittel (C) zwischen dem genannten ersten Abschnitt (5) und dem genannten zweiten Abschnitt (6), die gleitend an dem genannten ersten Abschnitt (5) montiert sind; wobei die genannten Verbindungsmittel (C) Zahnradgetriebemittel (11) umfassen, die an einem Ende der genannten Verbindungsmittel (C) gebildet sind, wobei das genannte Ende mit dem genannten zweiten Abschnitt (6) verbunden ist;
- ein Gleitstück (12), das zum Gleiten parallel zu der genannten ersten Achse (X1) an dem genannten Verbindungsmittel (C) geeignet ist und das mit einem Endabschnitt (17) versehen ist, der mit den genannten Zahnradgetriebemitteln (11) verbunden werden kann, und
- Betätigungsmittel (20, 18), die eine Gleitbewegung des genannten Gleitstücks (12) zwischen einer Position (A) des Einrückens des genannten Abschnitts (17) mit den genannten Zahnmitteln (11) und einer Position (B) des Ausrückens von den genannten Zahnmitteln (11) veranlassen können.

2. Lenksäule gemäß Anspruch 1, **dadurch gekennzeichnet, dass** die genannten Betätigungsmittel (20, 18) Mittel (18) vom Kabeltyp, wobei die genannten Mittel (18) vom Kabeltyp entsprechend dem genannten Endabschnitt (17) mit dem genannten Gleitstück (12) verbunden sind, und ein Steuerelement (20), das mit den genannten Mitteln (18) vom Kabeltyp verbunden ist, umfassen.

3. Lenksäule gemäß Anspruch 2, **dadurch gekennzeichnet, dass** das genannte Steuerelement (20) ein Hebel (20) für die Handbetätigung ist.

4. Lenksäule gemäß Anspruch 2, **dadurch gekennzeichnet, dass** das genannte Steuerelement (20) ein Pedalhebel ist, der im Wesentlichen nahe dem genannten unteren Ende (2') der genannten Säule (2) positioniert ist,

5. Lenksäule gemäß einem oder mehreren der Ansprüche 1 bis 4, **dadurch gekennzeichnet, dass** die genannten Verbindungsmittel (C) ein kastenförmiges Element (8), das den genannten ersten Abschnitt (5) teilweise überlappt, und ein gespaltenes Element (10), das mit dem genannten zweiten Abschnitt (6) verbunden ist und das an dem genannten kastenförmigen Element (8) angelenkt ist, um sich relativ zu dem genannten kastenförmigen Element (8) und um die genannte dritte Achse (X3) zu drehen, umfassen.

6. Lenksäule gemäß Anspruch 5, **dadurch gekennzeichnet, dass** das genannte kastenförmige Element (8) zwei Gleitlagerschalen (8', 8") umfasst, die um die genannte Säule (2) fest miteinander verbunden sind, und wobei das genannte gespaltene Element (10) zwei Gleitlagerschalen (10', 10") umfasst, die miteinander verbunden und jeweils an den genannten Gleitlagerschalen (8', 8") des genannten kastenförmigen Elements (8) angelenkt sind.

7. Lenksäule gemäß Anspruch 6, **dadurch gekennzeichnet, dass** die genannten Zahnradgetriebemittel (11) einen halbkreisförmigen Zahnbogen (11) umfassen, der an einer seitlichen Umfangsoberfläche einer Gleitlagerschale (10') der genannten Gleitlagerschalen (10', 10") des genannten gespaltenen Elements (10) gebildet ist.

8. Lenksäule gemäß Anspruch 7, **dadurch gekennzeichnet, dass** der genannte Bogen (11) an der genannten Gleitlagerschale (10') des genannten gespaltenen Elements (10) zusammen mit dem genannten gespaltenen Element (10) in einem einzelnen Block gebildet ist, der vorzugsweise durch Druckguss hergestellt ist.

9. Lenksäule gemäß einem oder mehreren der Ansprüche 6 bis 8, **dadurch gekennzeichnet, dass** das genannte Gleitstück (12) an einer Gleitlagerschale (8') der genannten Gleitlagerschalen (8', 8") des genannten kastenförmigen Elements (8) gleitet und eine geformte Aufnahme (15) als einen im Wesentlichen kegelstumpfförmigen konkaven Napf aufweist, wobei die Konkavität der genannten Gleitlagerschale (8') zugewandt ist, wobei die genannte Aufnahme (15) relativ zu einer Kugel (16), die in einer an der genannten Gleitlagerschale (8') vorgesehenen geeigneten festen Aufnahme positioniert ist, gleiten kann.

10. Lenksäule gemäß einem der Ansprüche 1 bis 9, **dadurch gekennzeichnet, dass** die genannte Steueranordnung (G) ferner elastische gegenüberliegende Mittel (21, 22) umfasst, die an den genannten Verbindungsmitteln (C) montiert sind, um eine elastische Rückstellbewegung des genannten Gleitstücks (12) aus der genannten ausgerückten Position (B) in die genannte eingerückte Position (A) zu ermöglichen.

11. Arbeitsmaschine, insbesondere langsam bewegte Landmaschine oder Gabelstapler, **dadurch gekennzeichnet, dass** sie eine Lenksäule (1) gemäß einem oder mehreren der vorhergehenden Ansprüche umfasst.

## Revendications

1. Colonne de direction (1) comportant une colonne tubulaire (2) ayant une extrémité inférieure (2') qui peut être ancrée à un support, ladite colonne (2) étant définie par :
- une première partie (5) comprenant ladite extrémité inférieure (2') et ayant un premier axe longitudinal (X1),
- une seconde partie (6) ayant un deuxième axe longitudinal (X2), ladite seconde partie (6) étant reliée de manière ajustable à ladite première partie (5) pour tourner autour d'un troisième axe (X3) transversalement par rapport auxdits premier et deuxième axes (X1, X2) par l'intermédiaire de moyens de couplage (7) ;
- un arbre (3) monté de manière rotative à l'intérieur de ladite colonne tubulaire (2) ;
- un volant de direction (4) relié sur un angle à une extrémité supérieure (3') dudit arbre (3) ;
- un ensemble de commande (G) pour permettre un actionnement d'ajustement de position dudit volant de direction (4) par rapport à ladite colonne (2) ; **caractérisée en ce que** ledit ensemble de commande (G) comprend :
- des moyens de liaison (C) entre ladite première partie (5) et ladite seconde partie (6), montés de manière coulissante sur ladite première partie (5) ; lesdits moyens de liaison (C) comprenant des moyens de transmission à roue dentée (11) formés sur une extrémité desdits moyens de liaison (C), dans lequel ladite extrémité est reliée à ladite seconde partie (6) ;
- un coulisseau (12) monté pour coulisser parallèlement audit premier axe (X1) sur lesdits moyens de liaison (C) et pourvu d'une partie d'extrémité (17) qui peut être reliée auxdits moyens de transmission à roue dentée (11), et
- des moyens d'actionnement (20, 18) qui peuvent provoquer un mouvement de coulissement dudit coulisseau (12) entre une position (A) d'engrènement de ladite partie (17) avec lesdits moyens à roue dentée (11) et une position (B) de désengrènement desdits moyens à roue dentée (11).

2. Colonne de direction selon la revendication 1, **caractérisée en ce que** lesdits moyens d'actionnement (20, 18) comprennent des moyens de type câble (18), lesdits moyens de type câble (18) étant reliés audit coulisseau (12), correspondant à ladite partie d'extrémité (17), et un élément de commande (20) relié auxdits moyens de type câble (18).

3. Colonne de direction selon la revendication 2, **caractérisée en ce que** ledit élément de commande (20) est un levier (20) pour un actionnement manuel.

4. Colonne de direction selon la revendication 2, **caractérisée en ce que** ledit élément de commande (20) est un levier de pédale positionné sensiblement à proximité de ladite extrémité inférieure (2') de ladite colonne (2).

5. Colonne de direction selon une ou plusieurs des revendications 1 à 4, **caractérisée en ce que** lesdits moyens de liaison (C) comprend un élément en forme de boîte (8) recouvrant partiellement ladite première partie (5), et un élément en forme de fourche (10) relié à ladite seconde partie (6) et pivoté sur ledit élément en forme de boîte (8) pour tourner par rapport audit élément en forme de boîte (8) et autour dudit troisième axe (X3).

6. Colonne de direction selon la revendication 5, **caractérisée en ce que** ledit élément en forme de boîte (8) comprend deux demi-paliers (8', 8") reliés de manière fixe entre eux autour de ladite colonne (2), et ledit élément en forme de fourche (10) comprend deux demi-paliers (10', 10") reliés entre eux et pivotés respectivement sur lesdits demi-paliers (8', 8") dudit élément en forme de boîte (8).

7. Colonne de direction selon la revendication 6, **caractérisée en ce que** lesdits moyens de transmission à roue dentée (11) comprennent un secteur denté semi-circulaire (11) formé sur une surface périphérique latérale d'un demi-palier (10') desdits demi-paliers (10', 10") dudit élément en forme de fourche (10).

8. Colonne de direction selon la revendication 7, **caractérisée en ce que** ledit secteur (11) est formé sur ledit demi-palier (10') dudit élément en forme de fourche (10) conjointement avec ledit élément en forme de fourche (10) en un seul bloc, de préférence par moulage sous pression.

9. Colonne de direction selon l'une ou plusieurs des revendications 6 à 8, **caractérisée en ce que** ledit coulisseau (12) coulisse sur un demi-palier (8') desdits demi-paliers (8', 8") dudit élément en forme de boîte (8) et présente un logement formé (15) sous forme d'un bol concave sensiblement tronconique, dont la concavité est tournée vers ledit demi-palier (8'), ledit siège (15) pouvant coulisser par rapport à une bille (16) positionnée dans un logement approprié fixe prévu sur ledit demi-palier (8').

10. Colonne de direction selon une ou plusieurs des revendications 1 à 9, **caractérisée en ce que** ledit ensemble de commande (G) comprend en outre des moyens antagonistes élastiques (21, 22) montés sur lesdits moyens de liaison (C) pour permettre un mouvement élastique de rappel dudit coulisseau (12) de ladite position désengrenée (B) vers ladite position engrenée (A).

11. Machine de travail, notamment une machine agricole lente ou un chariot élévateur, **caractérisée en ce qu'**elle comprend une colonne de direction (1) selon l'une ou plusieurs des revendications précédentes.
